(19) Europäisches Patentamt
European Patent Office
Office européen des brevets

(11) Veröffentlichungsnummer : **0 110 029**
**B1**

(12) # EUROPÄISCHE PATENTSCHRIFT

(45) Veröffentlichungstag der Patentschrift : **25.03.87**

(51) Int. Cl.[4] : **C 03 C 17/00**, E 06 B 3/66, G 02 B 1/10

(21) Anmeldenummer : **83108919.8**

(22) Anmeldetag : **09.09.83**

(54) **Farbneutrale, solarselektive Wärmereflexionsschicht für Glasscheiben.**

(30) Priorität : **27.10.82 DE 3239753**

(43) Veröffentlichungstag der Anmeldung : **13.06.84 Patentblatt 84/24**

(45) Bekanntmachung des Hinweises auf die Patenterteilung : **25.03.87 Patentblatt 87/13**

(84) Benannte Vertragsstaaten : **AT BE CH FR GB IT LI LU NL SE**

(56) Entgegenhaltungen :
**FR-A- 1 224 638**
**GB-A- 773 515**

(73) Patentinhaber : **DORNIER SYSTEM GmbH**
**Postfach 1360**
**D-7990 Friedrichshafen (DE)**

(72) Erfinder : **Scherber, Werner, Dr. phys.**
**Unterer Höhenweg 22**
**D-7775 Bermatingen (DE)**

(74) Vertreter : **Landsmann, Ralf, Dipl.-Ing.**
**Kleeweg 3**
**D-7990 Friedrichshafen 1 (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 110 029 B1

Jouve, 18, rue St-Denis, 75001 Paris, France

**Beschreibung**

Die Erfindung betrifft eine Isolierglasbeschichtung mit hoher Farbneutralität, hohem solarem Durchlässigkeitsgrad, niedrigem K-Wert und hoher Beständigkeit.

Bei der Wärmeisolierung von Häusern sind die mit Abstand schwächsten Stellen die Fenster. Einfache Dopperlverglasungen von Fenstern lassen mehr als 3 Watt pro Quadratmeter und Grad Temperaturunterschied verloren gehen, während die Wärmedurchgangszahl (K-Wert) von gut isolierenden Wänden unter 0,6 liegt.

Fenster verursachen jedoch nicht nur Wärmeverluste, sondern bringen bei richtiger Anordnung einen erheblichen Energiegewinn durch die tägliche Einstrahlung — auch im Winter und bei bedecktem Himmel. Es ist heute allgemein anerkannt, dass Fensterelemente eine der wichtigsten Komponenten für die passive Solarenergienutzung darstellen und es ist abzusehen, dass sich diese Erkenntnis künftig noch stärker in entsprechenden architektonischen und bautechnischen Lösungen niederschlagen wird.

Großflächige Verglasung von Wohnräumen erfordert jedoch einen besonders niedrigen K-Wert — möglichst vergleichbar mit dem des Mauerwerkes — da sonst durch die physiologische Abstrahlung und die verstärkte Luftzirkulation vor der kalten Glaswand keine Behaglichkeit entsteht und der Nutzeffekt durch Anhebung des Raumtemperaturpegels wieder aufgehoben wird.

Das heute zur Verfügung stehende Isolierglas schöpft die physikalisch gegebenen Möglichkeiten bei weitem nicht aus. Während in den letzten Jahren intensiv an der Verbesserung der Wärmedämmung von Fensterelementen gearbeitet wurde und auch gewisse Fortschritte erzielt wurden, ist die Erhöhung der solaren Durchlässigkeit bisher nicht gelungen ; im Gegenteil : Die einseitige Betonung des K-Wertes hat zur Entwicklung von Wärmereflexionsschichten geführt, welche die Gesamtdurchlässigkeit herabdrücken. Die diesbezüglichen Angaben der Hersteller beschränken sich deshalb meist auf die (maximale) Durchlässigkeit bei einer bestimmten Wellenlänge im Sichtbaren. Die derzeit marktüblichen goldbeschichteten Gläser mit zwei Scheiben besitzen eine solare Transmission von nur knapp 50 %. Ausserdem zeigen dünne Goldschichten auffällige Farbeffekte, welche schon aus Geschmacksgründen dem breiten Einsatz im Wohnhaus entgegen stehen.

Bekannte Drei-Scheiben-Isoliergläser bieten in dieser Hinsicht ebenfalls keine überzeugende Lösung, da nur K-Werte von etwa 1,9 $W/m^2$ K erreicht werden und die dritte Scheibe ebenfalls merklich reduzierte Durchlässigkeit, sowie zusätzliche Materialkosten und Gewicht mit sich bringt.

Die bekannte Technik, den Glaszwischenraum mit einem geeigneten Schwergas z. B. Freon oder Schwefelhexafluorid zu füllen und so die thermische Leitfähigkeit der Einheit zu reduzieren, kann als ausgereift angesehen werden. Alternative Gase, welche alle physikalischen und chemischen Anforderungen erfüllen, zudem ungiftig, unbrennbar, betriebssicher und kostengünstig sind, stehen nicht zur Verfügung.

Ähnlich ist es bei der Selektivbeschichtung, welche eingesetzt wird, um die Wärmeabstrahlung der Glasscheibe zu reduzieren und dadurch eine deutliche Verbesserung des K-Wertes herbeizuführen. Eine Erniedrigung des K-Wertes unter 1,4 $W/m^2$ K erfordert nach heutiger Kenntnis die selektive Beschichtung von mindestens zwei Glasoberflächen der Isolierglaseinheit, was aus den angeführten Gründen, der mangelnden Durchlässigkeit und Farbneutralität, auf der Basis der bekannten Schichten nicht möglich ist.

Bislang sind zwei Grundtypen von selektiv durchlässigen Schichten bekannt : Transparente Halbleiterschichten, wie dotiertes Zinnoxid oder Indiumoxid und sehr dünne Edelmetallfilme aus Gold, Silber, Kupfer u. a. Trotz vieler in der Fachliteratur beschriebener Varianten und Herstellungsvorschlägen hat sich bis heute nur die Goldbeschichtung durch Kathodenzerstäubung kommerziell behaupten können. Zinnoxidschichten, wie sie z. B. im Tauchverfahren hergestellt werden, sind für Isolierglas zu wenig durchlässig. Der Einsatz von Indiumoxidschichten wurde eingehend untersucht, aber wegen relativ hoher Prozeßkosten aufgegeben. Weitere bis heute bekannte Halbleitermaterialien mit brauchbaren optischen Eigenschaften stehen nicht zur Verfügung.

Auch für die Goldschicht liegt trotz ihrer Schwächen keine echte Alternative auf der Hand, da dieses Edelmetall zwei notwendige Eigenschaften, hohe chemische Beständigkeit und gute elektrische Leitfähigkeit, vereint. Andere gute Elektronenleiter sind nicht so stabil (z. B. Kupfer, Silber), ebenfalls nicht farbneutral oder in den Materialkosten prohibitiv (z. B. Platin, Rhodium).

Man versucht derzeit, durch Aufbau von Mehrfachschichtensystemen aus drei oder mehr Halbleiter- und Metallfilmen diese Schwierigkeiten zu überwinden, aber es ist abzusehen, dass den möglichen leichten Verbesserungen der optischen Kennwerte erhöhte Beschichtungskosten gegenüberstehen werden und so kein technischer Fortschritt erreichbar ist.

Es ist bekannt, dass die optischen Konstanten von Metallen oder zusammengesetzten Materialien durch geometrische Strukturierung beeinflußt werden. Die zuverlässige und verbindliche Messung optischer Konstanten gestaltet sich ja bekanntlich gerade deshalb so schwierig, weil die Ergebnisse stark von Strukturparametern wie Korngröße, Orientierung, Verunreinigungen, Oberflächenrauhigkeit,

Oxidhaut und dergleichen abhängen. Trotz dieser allgemein bekannten Zusammenhänge ist der Literatur bislang keine konkrete Angabe zur Erzeugung von selektiv-durchlässigen Strukturfiltern zu entnehmen.

Aus dem Stand der Technik ist folgendes bekannt :

Oberflächenrauhigkeit

Wie zahlreiche Untersuchungen (z. B. R. E. Rolling, A. T. Tunai, J. R. Grammer : Investigation of the effect of surface conditions on the radiant properties of metals ; Lockheed missiles and space company. Techn. Report No. AFML-TR-64363, Nov. 1964) bestätigen, steigen mit zunehmender Oberflächenrauhigkeit undurchlässiger Stoffe Absorptionsgrad und Emissionsgrad an, während der Reflexionsgrad abnimmt. Eine andere Gruppe von Arbeiten (z. B. M. J. Minot : Single layer gradient refractive index antireflexion films effective from 0,35 to 2,5 µm, J. Opt. Soc. Amer. *66*, 515 (1976)) ist der Transmission und Reflexion von durchsichtigen Materialien mit verschieden rauhen Oberflächen gewidmet. Die Gesamttransmission steigt im allgemeinen beim Übergang von glatten zu rauhen Oberflächen, weil ein « weicher » Übergang des Brechungsindex erzeugt wird und dadurch die Fresnel'sche Reflexion weitgehend vermieden wird. Abgesehen von diesen Oberflächenmodifikationen beziehen sich die bekannten Arbeiten auf homogene Materialien, deren « innere Transmission » konstant bleibt. Dagegen hat die Erfindung die Veränderung der optischen Konstanten der Gesamtschicht zum Ziel, so dass innere und äussere Transmission reduziert werden und ohne dass eine Antireflexschicht oder Antireflexzone an der Oberfläche eingeführt wird.

Pigmentstrukturen

Ein Beispiel für die Beeinflussung der inneren oder der spezifischen Materialeigenschaften durch Strukturierung ist die Entwicklung der selektiven Solarabsorber. Es ist seit langem bekannt, dass Metalle bei Dispergierung eine resonanzartige Zunahme des Absorptionsgrades erfahren (R. H. Doremus : Optical Properties of Small Gold Particles ; J. Chemical Physics *40*, 2389 (1964)). Das kann beobachtet werden bei metallischen Aerosolen oder Hydrosolen oder bei Einlagerung kleinster Metallteilchen in Glas. Ist die pigmentierte Glasschicht sehr dünn und auf einer metallischen Unterlage aufgebracht, so kann ein effektiver selektiver Solarabsorber entstehen, da das kurzwellige Sonnenlicht absorbiert wird, während die langwellige IR-Strahlung von der Pigmentstruktur durchgelassen wird und dadurch der hohe Reflexionsgrad der Unterlage zur Wirkung kommt.

Gitterstrukturen

Bekannt ist der Vorschlag, dünne Metall- oder Halbleiterfilme durch Anwendung von Gitter- oder Maschenstruktur im Solarbereich durchlässig zu machen und dennoch die hohe Infrarotreflexionswirkung aufrechtzuerhalten (J. C. C. Fan, F. J. Bachner, R. A. Murphy : Thin film conducting microgrids as transparent heat mirror : Appl. Phys. Letters *28*, 440, 1976). Die Grundidee dabei ist, die Maschenweite a so zu dimensionieren, dass sie größer als die Wellenlänge der Sonnenstrahlung $\lambda_{sol}$ ist ($a > \lambda_{sol}$), aber kleiner als die Wellenlänge der Wärmestrahlung ($a < \lambda_{IR}$). Bei einer als optimal angesehenen Maschenweite von $a = 2{,}5$ µm wird die Durchlässigkeit der Sonnenstrahlung weitgehend nach den Regeln der geometrischen Optik (Öffnungsfläche zu Stegfläche) bestimmt, während die IR-Strahlung ähnlich wie an einer Gitterantenne reflektiert wird. Trotz dieser plausiblen Darstellung hat sich die Gitterstruktur nicht bewährt.

Fan et al. berichten, dass einer Transmissionssteigerung von 0,8 auf 0,9 eine Reflexionserniedrigung von 0,91 auf 0,83 gegenübersteht. Eine ähnliche Verschiebung ließe sich bereits durch eine Verkleinerung der Schichtdicke erzeugen. Bekannt ist eine allgemeine Behandlung des Problems (D. Pramanik, A. J. Sievers, R. H. Silsbee : The spectral selectivity of conducting micromeshes. Solar Energy Mat. *2*, 81, 1979). Aus grundsätzlichen Erwägungen heraus wurde gefunden, dass Gitterstrukturen aus Halbleitern und aus den meisten Metallen sich immer ungünstiger als homogene Filme verhalten. Eine beschränkte Anwendung wurde Gittern aus Aluminium oder Magnesium zugestanden, die erforderlichen Randbedingungen (Steghöhe >> Stegbreite ; senkrechter Einfallswinkel) sind jedoch so gravierend, dass eine Anwendung für Fensterscheiben nicht infrage kommt.

Der Erfindung liegt die Aufgabe zugrunde, eine Beschichtung für eine Isolierglaseinheit, bestehend aus vorzugsweise zwei Glasscheiben mit einem gasgefüllten Zwischenraum, zu erzeugen, welche eine hohe Durchlässigkeit für Sonnenstrahlung, in Verbindung mit einem niedrigen K-Wert und einer ausreichenden Farbneutralität besitzt.

Diese Aufgabe wird erfindungsgemäß durch den Einsatz einer spektralselektiven Beschichtung gemäß Anspruch 1 gelöst. Diese besteht im Gegensatz zu den bekannten, aus homogenen metallischen oder halbleitenden Schichten aufgebauten Systemen aus einem zusammengesetzten Material, bei dem kleine dielektrische Bereiche oder Partikel räumlich verteilt in eine zusammenhängende leitende Schicht eingebettet sind.

Randbedingungen für die Komponenten bezüglich ihrer optischen Konstanten und ihrer Dimensionierung und Herstellungsverfahren sind Gegenstände von Unteransprüchen.

Erfindungsgemäß wird einerseits eine hohe elektronische Leitfähigkeit der Schicht, zumindest in lokalen Teilzonen, andererseits eine überproportional hohe breitbandige Durchlässigkeit für Solarstrahlung erreicht. Die Steigerung der solaren Transparenz wird durch das Zusammenspiel zweier Mechanismen erreicht. Einmal wird der Absorptionskoeffizient der Schicht stark, d. h. um einen Faktor 3 bis 10 abgesenkt, so dass die Eindringtiefe bzw. die « innere Transmission » entsprechend steigt, zum anderen wird der Brechungsindex n der Schicht auf einen Wert zwischen 1 und 1,5, also zwischen den Werten von Luft und Glassubstrat, eingestellt, so dass ein deutlicher Antireflexeffekt erreicht wird und auch die « äussere Transmission » ansteigt.

Die erhöhte Durchlässigkeit kann in zweifacher Hinsicht ausgenutzt werden. Bei Verglasungen mit direkter winterlicher Sonneneinstrahlung und Abschattungsmöglichkeit im Sommer bringt allein die Durchlässigkeitssteigerung eine starke Erniedrigung des äquivalenten K-Wertes $K_{eq}$ ($K_{eq}$ ist definiert z. B. bei : G. Ortmanns : Bauelemente mit Flachglas, ihre Bedeutung im Hinblick auf Energieeinsparung im Bauwesen ; Glastechnische Berichte 53, 237, 1980), d. h. die Wärmebilanz einer solchen Einheit ergibt hohe positive Werte.

Bei weniger bestrahlten Flächen, also nach Norden gerichtete Fenster und Fassaden, ist es vorteilhafter, die neue Schicht auf beide Innenflächen der Isolierglaseinheit aufzubringen und somit den normalen K-Wert unmittelbar abzusenken. Für solche doppelt beschichtete Scheiben wurden Wärmedurchgangszahlen von unter 1 $W/m^2K$ vorausgesagt. Heute verfügbare Selektivschichten wären für diesen Zweck allein wegen der starken Abdunkelung nicht anwendbar.

Zum besseren Verständnis der Erfindung soll kurz auf die Optik dünner leitfähiger Schichten eingegangen werden.

Ein unmittelbares Merkmal für wärmereflektierende Glasbeschichtung ist die unterschiedliche Eindringtiefe für sichtbares Licht und für Infrarotstrahlung. Trivialerweise muß die Dicke einer Schicht mindestens so groß gewählt werden, wie es der Eindringtiefe für Infrarotstrahlung in dem betreffenden Schichtmaterial entspricht. (Zur Erzielung hoher Wärmereflexionsgrade müssen natürlich neben der Schichtdicke noch weitere Anforderungen, insbesondere metallische Leitfähigkeit, erfüllt sein). Ist diese Mindestschichtdicke deutlich kleiner als die Eindringtiefe für sichtbares Licht, dann ist eine notwendige Voraussetzung für selektive Durchlässigkeit im Sinne der Aufgabenstellung gegeben.

Quantitativ hängt die Eindringtiefe W mit dem Absorptionskoeffizient k und der Wellenlänge auf einfache Weise zusammen : $W = \lambda/4\pi k$.

Nach Durchdringen der Grenzfläche ist W unabhängig vom Brechungsindex n.

Für einige Metalle sind die entsprechenden Werte nachfolgend angegeben :

| Metall | Sichtbar ($\lambda$ = 0,5 µm) n | k | $W_{vis}$ | Infrarot ($\lambda$ = 10 µm) n | k | $W_{IR}$ | $W_{vis}/W_{IR}$ |
|---|---|---|---|---|---|---|---|
| Au | 0,7 | 1,64 | 24,3 nm | 6 | 70 | 11,4 nm | 2,13 |
| Ag | 0,24 | 3,0 | 13,2 nm | 10 | 90 | 8,8 nm | 1,5 |
| Ti | 1,8 | 2,4 | 16,6 nm | 9 | 36 | 22,1 nm | 0,75 |
| Gd | 1,35 | 0,8 | 39,8 nm | 3 | 1,22 | 653 nm | 0,08 |

Daraus ist sofort die relativ gute Eignung von Gold als Selektivschicht für Fenster verständlich, da die Eindringtiefe für sichtbares Licht mehr als doppelt so groß ist, wie für Infrarotstrahlung. Während gute Elektronenleiter wie Au, Cu, Ag noch $W_{vis}/W_{IR}$-Faktoren um oder über 1 besitzen, liegen andere Metalle meist wesentlich tiefer.

Diese Beziehungen machen auf einfache Weise deutlich, dass es aufgrund der Naturgesetze nicht möglich ist, mit homogenen metallischen Schichten — mit Ausnahme der bekannten Beispiele — gute solarselektive Transmitter herzustellen.

Niedrige Absorptionskoeffizienten k im Sichtbaren bedingen im allgemeinen auch ein niedriges k im Infraroten und umgekehrt.

Das Wesentliche der Erfindung besteht nun darin, dass sie einen Weg aufweist, wie dieser ungünstige innere Zusammenhang metallischer Materialien aufgelöst werden kann. d. h. wie eine starke Reduzierung des Absorptionskoeffizienten im Sichtbaren oder solaren Spektralbereich herbeigeführt werden kann, ohne die elektronische Leitfähigkeit und den Infrarot-Reflexionsgrad wesentlich zu verändern.

Die Komponenten der zusammengesetzten Schicht müssen bestimmten Anforderungen genügen, um das Verhältnis : Solare Transmission zu Wärmereflexion $\tau_{sol}/\rho_{IR}$ günstig zu beeinflussen. Aus den bisherigen Untersuchungen lassen sich folgende Regeln ableiten :

— Die Durchmesser der in der Metallschicht eingelagerten Partikel oder Poren sollten kleiner als die Schichtdicke und kleiner als die kürzeste transmittierte Lichtwellenlänge sein.

— Der Volumenanteil der dielektrischen Bereiche sollte mindestens 50 % betragen.

— Die dielektrischen Bereiche können kugelförmig oder nadelförmig, mit Längsachse senkrecht zur Schichtoberfläche, sein.

— Im solaren Spektralbereich, insbesondere bei $\lambda = 0{,}5\ \mu m$ sollten für die optischen Konstanten des Trägers T und der Partikel P folgende Beziehungen gelten :

$$1 < k_T < 2{,}5 \; ; \; n_T < 1$$

$$n_p \approx k_T \; ; \; k_p = 0$$

Mit Worten : Das Trägermetall (oder Halbleiter) sollte einen Absorptionskoeffizienten zwischen 1 und 2,5 besitzen, der dem Wert des Brechungsindex des dielektrischen Pigmentes möglichst nahekommt. Ausserdem sollte der Brechungsindex des Trägers möglichst klein und vorteilhafterweise nicht grösser als 1 sein.

Eine zusätzliche vorteilhafte, wenngleich nicht notwendige Bedingung ist, dass das Pigment auch im Infraroten, um $\lambda = 10\ \mu m$, durchlässig sein sollte : $k_p = 0$ (Infrarot).

Ein Blick auf die optischen Konstanten verfügbarer Materialien zeigt, dass die genannten Bedingungen die Auswahl geeigneter Stoffpaarungen stark eingrenzen. Besonders einschneidend ist die Bedingung $n_T < 1$, welche nur wenige reine Metalle wie Au, Ag, Cu, Al, Mg, Y, Zr und einige Lanthaniden gut oder zumindest annähernd erfüllen können. Bei gleichzeitiger Beachtung der Regel $k_T < 2{,}5$ kommt vor allem dem Gold besondere Bedeutung zu. Die Auswahl passender dielektrischer Bereiche ist hingegen weniger problematisch. Neben Luft mit $n_p = 1$ ist eine Reihe von transparenten Verbindungen, vor allem Oxide und Fluoride, z. B. $SiO_2$, $Al_2O_3$, $MgF_2$ mit geeigneten Brechungsindizes verfügbar. Auch die Zusatzforderung der Infrarottransparenz kann erfüllt werden, z. B. von vielen Kunststoffen wie Polyester, Polyäthylen, Polypropylen, von transparenten Halbleitern wie Indiumoxid, Zinnoxid, sowie von einigen Alkali- und Erdalkalihalogeniden.

Die Angabe besonders geeigneter Trägermetalle wie z. B. Gold soll nicht bedeuten, dass die Erfindung auf diese Elemente beschränkt ist. Es ist nur eine Auswahl von Stoffen mit heute bekannten optischen Konstanten. Im Grunde sind viele weitere leitfähige Materialien denkbar, welche die oben genannten Beziehungen erfüllen können, deren optischen Kennwerte mangels technischer Bedeutung bislang nur nicht bestimmt wurden, z. B. intermetallische Verbindungen der Alkali- und Erdalkalielemente.

Weitere Vorteile, Merkmale und Anwendungen ergeben sich aus den nachfolgend beschriebenen Figuren.

Es zeigen :

Figur 1 einen Vergleich der Durchlässigkeits- und K-Werte zwischen dem Stand der Technik und der Erfindung,

Figuren 2 und 3 Spektralkurven des Standes der Technik und der Erfindung.

In Fig. 1 sind Durchlässigkeits- und K-Werte verschiedener Isolierglastypen nach heutigem Stand der Technik und das durch die Erfindung erreichbare Gebiet graphisch dargestellt.

Es bedeuten :

2 S und 3 S : Zwei- und Dreischeibenisolierglas ohne Beschichtung
2 S G : Zweischeibenisolierglas mit Goldbeschichtung nach dem Stand der Technik
2 S 2 G und 3 S 2 G : Zwei- und Dreischeibenisolierglas mit zweifacher Goldbeschichtung
2 S E und 3 S E : Zwei- und Dreischeibenisolierglas mit erfindungsgemässer Beschichtung.

Erfindungsgemäß sind zum ersten Mal Scheiben mit hoher Durchlässigkeit und gleichzeitig niedrigem K-Wert realisierbar.

Fig. 2 zeigt die unterschiedlichen Spektralkurven einer solarabsorbierenden Schicht des Standes der Technik und der erfindungsgemässen solardurchlässigen Schicht. In der Figur ist schematisch der jeweilige Strukturaufbau dargestellt. Während der bekannte Solarabsorber aus einer transparenten dielektrischen Schicht, in die metallische Pigmente eingelagert sind, besteht, ist der Erfindungsgegenstand dazu reziprok aufgebaut : In einer Metallschicht sind dielektrische Bereiche eingelagert. Die Erfindung realisiert erstmals hohe solare Transmission mit hoher Infrarot-Reflexion.

Fig. 3 zeigt den Einfluß der erfindungsgemässen Einlagerung dielektrischer Bereiche auf Transmissionsgrad $\tau$ und Reflexionsgrad $\rho$ einer 10 nm dicken Goldschicht. Durch die Einlagerung von $SiO_2$-Teilchen mit 50 % Volumenanteil steigt die solare Transmission von 48 auf 77 %.

Die Reflexion im fernen Infrarot oberhalb von 20 $\mu m$ wird kaum beeinträchtigt, so dass die Gesamtwärmereflexion $\rho_{IR}$ nur um 9 % absinkt. Ausserdem ergibt sich im sichtbaren Bereich eine deutliche Linearisierung der spektralen Struktur, d. h. der typische Peak bei 500 nm, welcher für die Farbgebung des Goldes verantwortlich ist, wird weitgehend ausgeglichen.

Die erfindungsgemässe Beschichtung liefert also Gläser hoher Farbneutralität.

Der Erfindungsgegenstand unterscheidet sich auch von Gegenständen, die durch Gitter- oder Maschenstruktur hergestellt wurden :

— Die Öffnungen der Gitterstruktur sind mit etwa 2 µm größer als die Lichtwellenlänge ; die Durchmesser der transparenten Teilchen oder Poren in der erfindungsgemässen Struktur liegen bei 1 bis 10 nm.

— Die erhöhte Transmission wird bei der Gitterstruktur durch geometrische Aussparungen einer Schicht erreicht, bei der Erfindung durch Erniedrigung des Absorptionskoeffizienten, also durch Veränderung der inneren elektronischen Eigenschaften des Schichtmaterials.

— Gitterstrukturen sind in ihrer Wirkung zweidimensionale Gebilde, erfindungsgemäße Strukturen wirken dreidimensional, auch wenn auf die Schichtdicke nur wenige Lagen dielektrischer Teilchen kommen.

— Effektive Gitterstrukturen können nur mit einigen wenigen Metallen (wie z. B. Al) realisiert werden. Erfindungsgemäße Strukturen sind vorteilhafterweise aus Metall und Dielektrikum zusammengesetzt. Beide Komponenten sollten bezüglich ihrer optischen Konstanten bestimmte Randbedingungen erfüllen, wie oben erläutert, was jedoch viele reale Materialpaarungen erlaubt.

Die Herstellung der erfindungsgemässen Schichten ist mit herkömmlichen Methoden der Glasbeschichtung durch Vakuumbedampfung oder Kathodenzerstäubung (Sputtern) nicht möglich. Wegen der Neigung metallischer Stoffe, in Form von Inseln oder Tröpfchen zu kondensieren (H. Mayer : Physik dünner Schichten ; Wissenschaftl. Verlagsgesellschaft, Stuttgart 1955), entsteht normalerweise bei der Herstellung dünner zusammengesetzter Filme immer der konträre Strukturtyp (Metallpigment in dielektrischer Matrix) mit erhöhter, statt erniedrigter Absorption. Die Ausschaltung und Umkehrung dieser von der Natur vorgegebenen Vorzugsrichtung ist Gegenstand des erfindungsgemäßen Verfahrens. Die konkrete Ausführung kann entsprechend den nachfolgend beschriebenen Verfahren erfolgen :

## Innere Oxidation

Man bringt eine Metall-Legierung oder ein nichtmischbares Metall-Metall-System in dünner Schicht auf eine Glasscheibe auf. Dies kann in an sich bekannter Weise durch Bedampfen aus einer oder zwei Quellen oder durch Sputtern eines oder zwei Targets (sequentiell oder simultan) geschehen. Durch die Verwendung von zwei Metallkomponenten wird logischerweise erreicht, dass überwiegend ein Metall als « Partikel », das andere als « Träger » vorliegt. Welche Komponente in einem gegebenen System als Partikel vorliegt, kann generell nicht vorausgesagt, sondern muß jeweils durch Versuche ermittelt werden, wobei die Volumenanteile sowie die übrigen Abscheideparameter bis zu einem gewissen Grad von Bedeutung sein können. Nach der Abscheidung wird die Schicht in oxidierender Atmosphäre getempert, wobei die Partikelkomponente sich in ein dielektrisches Material (Oxid) umwandelt. Die Partikelkomponente muß also vornehmlich aus einem leicht oxidierbaren Metall wie Al, Mg, Sn, Ce u. a., und die Trägerkomponente vornehmlich aus einem langsamer oxidierbaren Metall oder einem Edelmetall wie Ni, Cr, Au, Ag, Pt bestehen. Unter Umständen erübrigt sich die Temperung als separater Verfahrensschritt, wenn das Partikelmaterial bereits bei normalen Umgebungsbedingungen oxidiert, wie das bei vielen Metallen in fein verteilter Form zu beobachten ist. In diesem Fall bekommt die Isolierglaseinheit allein durch Lagerung nach einigen Stunden oder Tagen ihre volle Wirksamkeit.

## Plasmakonversion

Eine Abwandlung des Verfahrens der inneren Oxidation besteht in der Anwendung alternativer Gasatmosphären, mit denen sich das gewählte Partikelmetall zu nichtoxidischen, stabilen, transparenten Dielektrika wie Fluoride, Nitride, Boride umsetzt. In Verbindung mit der Sputtertechnik kann dies auf sehr elegante Weise gescheben, wenn als Reaktionsgas eine stabile, inerte, ungiftige Verbindung des jeweiligen Partnerelementes verwendet wird z. B. Frigen für Fluoride, Stickstoff für Nitride, Borsäureester für Boride. Im Plasma werden diese Verbindungen gespalten, so dass die entsprechenden reaktiven Elemente in unmittelbarer Nähe der Schichtoberfläche entstehen und mit dem Partikelmetall abreagieren.

## Innere Reduktion

Man erzeugt eine feinkörnige Schicht, in der zwei verschiedene dielektrische Verbindungen nebeneinander vorliegen. Sind die Korngrössen der beiden Substanzen stark unterschiedlich, so werden sich die Körner der grösseren Komponente im statistischen Mittel untereinander berühren, während die kleineren Körner sich bevorzugt in den Zwischenräumen ansammeln und diese Gruppen eher voneinander abgetrennt sind. Auch hier spielen Volumenanteile, Materialart und Korngestalt eine Rolle, dennoch kann die Unterschiedlichkeit der Korngröße als ein wichtiges Regulativ des Verfahrens betrachtet werden. Wie die Korngröße im Einzelfall von den Abscheideparametern zu beeinflussen ist, muß wieder experimentell durch Optimierung von Substrattemperatur, Aufwachsrate, Restgasdruck, Restgasatmosphäre usw. herausgefunden werden.

Nach der Abscheidung wird die Schicht einer Temperaturbehandlung ausgesetzt, wobei die Matrixkomponente zum Metall umgewandelt wird und zugleich ein Sintervorgang einsetzt, der die

Schicht verdichtet und gute elektrische Verbindung zwischen den Metallteilchen herstellt.

Bei diesem Verfahren muß also die Partikelkomponente aus einer transparenten, thermisch stabilen Verbindung wie $Al_2O_3$, $SiO_2$, $MgF_2$ und die Matrixkomponente aus einer thermisch nicht beständigen oder leicht reduzierbaren Verbindung wie NiO, CuO oder einem anderen Oxid der Übergangselemente, oder aus einer Verbindung der Edelmetalle bestehen. In den meisten Fällen wird die Anwendung einer reduzierenden wasserstoffhaltigen Atmosphäre bei der Temperung notwendig oder vorteilhaft sein.

Disproportionierung

Man erzeugt eine zusammengesetzte Schicht aus einem Metall und einem Dielektrikum (Cermet) auf herkömmliche Weise, wobei die Metallteilchen, wie oben beschrieben, ohne gegenseitigen Kontakt in isolierenden Träger eingebettet sind. Durch eine thermische Nachbehandlung wird eine chemische Reaktion eingeleitet, welche eine metallische leitfähige Verbindung zwischen den Metallpartikeln herstellt. Dies kann durch eine Diproportionierungsreaktion nach dem Schema

$$2\,AO + B \longrightarrow AO_2 + AB$$

bewerkstelligt werden, wobei A und B zwei geeignete Metalle sind, AO und $AO_2$ sind zwei Oxide von A und AB ist eine intermetallische Verbindung.

Durch die Bildung der neuen Verbindung AB tritt eine Umkristallisierung in der Schicht ein, welche bei geeigneter Prozeßführung und Materialpaarung eine leitfähige Verbindung zwischen den noch nicht abreagierten Metallpartikeln B herstellt und so eine leitfähige Schicht mit isolierenden Partikeln im Sinne der Aufgabenstellung erzeugt wird.

Als Beispiel für die Substanz AO sei SiO genannt, welches unter Sauerstoffmangel zu $SiO_2$ disproportioniert und das freiwerdende Silizium mit gleichzeitig vorhandenen Metallen wie Cu, Cr, Ni, Pd entsprechende Silizide bildet. Weitere Beispiele für A sind Wismuth, Zinn und Indium, welche entsprechende Suboxide und stabile transparente Oxide besitzen und intermetallische Verbindung bilden. Die beiden letzten Beispiele $SnO_2$ und $In_2O_3$ sind zusätzlich IR-transparent und bringen dadurch wie oben erläutert zusätzliche Selektivität.

**Patentansprüche**

1. Isolierglasbeschichtung mit hoher Farbneutralität, hohem solarem Durchlässigkeitsgrad, niedrigem K-Wert und hoher Beständigkeit, dadurch gekennzeichnet, daß die Beschichtung aus einem elektrisch leitenden Trägermaterial besteht, in dem transparente dielektrische Bereiche in Form von Partikeln oder Poren eingelagert sind, deren Durchmesser kleiner als die Schichtdicke und kleiner als die kürzeste transmittierte Lichtwellenlänge sind.

2. Beschichtung nach Anspruch 1, dadurch gekennzeichnet, daß für die dielektrischen Bereiche und für den Träger Materialien kombiniert werden, welche die Forderung : Absorptionskoeffizient des Trägermaterials ist gleich Brechungsindex der dielektrischen Bereiche ($k_T = n_p$) über einen möglichst breiten Bereich des Sonnenspektrums, schwerpunktmäßig jedoch bei 0,5 $\mu$m, erfüllen.

3. Beschichtung nach den Ansprüchen 1 und 2, dadurch gekennzeichnet, daß der Volumenanteil der dielektrischen Bereiche mindestens 50 % beträgt.

4. Beschichtung nach den Ansprüchen 1 bis 3, dadurch gekennzeichnet, daß die dielektrischen Bereiche kugelförmig oder nadelförmig, mit Längsachse senkrecht zur Schichtoberfläche, sind.

5. Beschichtung nach den Ansprüchen 1 bis 4, dadurch gekennzeichnet, daß das Trägermaterial im solaren Spektralbereich, insbesondere bei $\lambda = 0{,}5\ \mu$m, einen Absorptionskoeffizienten zwischen 1 und 2,5 besitzt, der dem Wert des Brechungsindex der dielektrischen Bereiche möglichst nahe kommt und der Brechungsindex des Trägermaterials möglichst klein und nicht größer als 1 ist.

6. Beschichtung nach den Ansprüchen 1 bis 5, dadurch gekennzeichnet, daß die dielektrischen Bereiche auch im Infraroten, um $\lambda = 10\ \mu$m, durchlässig sind : $k_p = 0$ (Infrarot).

7. Beschichtung nach den Ansprüchen 1 bis 6, dadurch gekennzeichnet, daß der Brechungsindex der Beschichtung zwischen 1 und 1,5 liegt.

8. Beschichtung nach den Ansprüchen 1 bis 7, dadurch gekennzeichnet, daß als Trägermaterial Metalle mit einem relativ kleinen Brechungsindex im Solarbereich, wie z. B. Au, Ag, Cu, Al, Mg, Y, Zr verwendet werden.

9. Beschichtung nach den Ansprüchen 1 bis 7, dadurch gekennzeichnet, daß als Trägermaterial eine intermetallische Verbindung der Alkali- oder Erdalkalimetalle verwendet wird.

10. Beschichtung nach den Ansprüchen 1 bis 7, dadurch gekennzeichnet, daß als dielektrisches Material Halbleiter verwendet werden, welche im Sichtbaren und im Infraroten transparent sind, wie $SnO_2$ oder $In_2O_3$.

11. Beschichtung nach den Ansprüchen 1 bis 7, dadurch gekennzeichnet, daß als dielektrisches Material Luft oder andere Stoffe wie Kunststoffe, Alkali- und Erdalkalihalogenide, welche im Sichtbaren

und im Infraroten transparent sind, verwendet werden.

12. Verfahren zur Herstellung einer Beschichtung nach den Ansprüchen 1 bis 11, dadurch gekennzeichnet, daß eine dünne Schicht aus einem Metall-Metall-Gemisch oder einer Legierung aufgebracht wird und durch nachfolgende Lagerung an Luft oder durch eine Temperaturbehandlung eine Metallkomponente (Partikel) selektiv oxidiert wird.

13. Verfahren zur Herstellung einer Beschichtung nach den Ansprüchen 1 bis 11, dadurch gekennzeichnet, daß eine dünne Schicht aus einem Metall-Metall-Gemisch oder einer Legierung mittels Kathodenzerstäubung aufgebracht wird und nachfolgend durch Plasmakonversion in einer gasförmigen Fluor-, Stickstoff- oder Borverbindung eine selektive Reaktion einer Metallkomponente hervorgerufen wird und ein transparentes dielektrisches Fluorid, Nitrid oder Borid gebildet wird.

14. Verfahren zur Herstellung einer Beschichtung nach den Ansprüchen 1 bis 11, dadurch gekennzeichnet, daß eine dünne Schicht aus einem Gemisch zweier Metallverbindungen mit unterschiedlicher thermischer Stabilität und vorzugsweise unterschiedlicher Korngröße aufgebracht wird und nachfolgend durch eine (reduzierende) Wärmebehandlung eine Komponente (Trägermaterial) selektiv zum Metall reduziert wird.

15. Verfahren zur Herstellung einer Beschichtung nach den Ansprüchen 1 bis 11, dadurch gekennzeichnet, daß eine dünne Schicht aus einem Metall A und einem Suboxid BO aufgebracht wird und durch eine nachfolgende Wärmebehandlung eine teilweise Disproportionierung der Komponenten eingeleitet wird, bei der das Suboxid in ein stabiles höherwertiges (nichtleitendes und transparentes) Oxid z. B. $BO_2$ übergeht und zugleich eine leitende Verbindung AB entsteht, welche die vorher isolierten Metallpartikel miteinander leitfähig verbindet.

**Claims**

1. An insulating glass pane consisting essentially of a glas substrate and a selective coating with high color neutrality, high solar transmissivity, low k-value and high stability on an outer surface of said substrate, said coating comprising a pigment component and a carrier component and consisting of an electrically conductive layer having very small, transparent, non-conductive discrete dielectric zones embedded therein and where the diameters of the dielectric zones embedded in the conductive layer are smaller than the electrically conductive layer thickness and smaller than the shortest light wavelength.

2. An insulating glass pane to claim 1, characterized thereby, that the absorption coefficient of the carrier component is equal to the refractive index of the pigment component over a broad wavelength range of the solar spectrum including 0,5 µm.

3. An insulating glass pane to claim 1 and 2, characterized thereby, that the volume fraction of the dielectric zones is at least 50 % of the coating volume.

4. An insulating glass pane to claim 1 to 3, characterized thereby, that the dielectric zones are spherical or are needle-shaped and their longitudinal axes are perpendicular to the surface of the electrically conductive layer.

5. An insulating glass pane to claim 1 to 4, characterized thereby, that the carrier component has an absorption coefficient between 1 and 2,5 in the solar system at substantially $\lambda = 0,5$ µm, and the refractive index of the carrier component is not greater than 1.

6. An insulating glass pane to claim 1 to 5, characterized thereby, that the pigment component is also transmissive in the infrared range at about $\lambda = 10$ µm ; $k_p = 0$.

7. An insulating glass pane to claim 1 to 6, characterized thereby, that the refractive index of the coating is between 1 and 1,5.

8. An insulating glass pane to claim 1 to 7, characterized thereby, that a metal with a relatively small refractive index in the solar range selected from the group consisting of Au, Ag, Cu, Al, Mg, Y und Zr, is used as the carrier component.

9. An insulating glass pane to claim 1 to 7, characterized thereby, that an intermetallic compound of the alkali or alkaline earth metals is used as the carrier component.

10. An insulating glass pane to claim 1 to 7, characterized thereby, that the pigment component is a semiconductor which is transparent in the visible and in the infrared range selected from the group consisting of $SnO_2$ and $In_2O_3$.

11. An insulating glass pane to claim 1 to 7, characterized thereby, that the pigment component is selected from the group consisting of air, plastic, alkali metal halides and alkaline earth metal halides which are transparent in the visible and in the infrared range.

12. A process for the production of an insulating glass pane of claim 1, characterized thereby, that comprises coating a surface of a glass substrate with a thin layer of a mixture of two metals, and selectively oxidizing one metal component, that said metal component is oxidized by exposure to the air or by a heat treatment or said mixture of metals is a metal alloy and one metal component is oxidized by exponsure to the air or oxidized by a heat treatment.

13. A process to claim 12, characterized thereby, that said glass substrate is coated by cathode sputtering, and said coating is subjected to a selective reaction of one metal component by plasma

conversion in a gaseous compound selected from the group consisting of fluorine, nitrogen and boron compounds, whereby discrete transparent dielectric zones are formed.

14. A process to claim 12 and 13, characterized thereby, that comprises coating a glass substrate with a thin layer of a mixture of two metal compounds of different thermal stability and different particle size, and subsequently selectively reducing one mixture component to the free metal by a reducing heat treatment.

15. A process to claim 12 to 14, characterized thereby, that comprises coating a glass substrate with a thin layer of a mixture of discrete particles of a metal A and suboxide BO and subjecting said coating to partial disproportioning of its components by a subsequent heat treatment, whereby said suboxide is converted into a stable, high-valenced, non-conductive and transparent oxide, e. g. $BO_2$, and at the same time a conductive compound of said metal A with said suboxid BO is formed which joins the previously separate metal particles conductively with each other.

**Revendications**

1. Revêtement de vitrages isolants avec une neutralité chromatique élevée, un haut degré de transmission pour le rayonnement solaire, une faible valeur K et une grande stabilité, caractérisé en ce que le revêtement se compose d'un matériau de support électriquement conducteur dans lequel sont incorporées des zones diélectriques transparentes sous forme de particules ou de pores dont les diamètres sont inférieurs à l'épaisseur de couche et inférieurs à la plus faible des longueurs d'ondes lumineuses transmises.

2. Revêtement selon la revendication 1, caractérisé en ce que, pour les zones diélectriques et pour le support, il combine des matériaux qui satisfont à l'exigence : le coefficient d'absorption du matériau de support est égal à l'indice de réfraction des zones diélectriques ($k_T = n_p$) sur une plage aussi large que possible du spectre solaire, mais avec un centre de gravité à 0,5 $\mu$m.

3. Revêtement selon l'une des revendicaitons 1 ou 2, caractérisé en ce que la proportion en volume des zones diélectriques est d'au moins 50 %.

4. Revêtement selon l'une quelconque des revendications 1 à 3, caractérisé en ce que les zones diélectriques présentent une forme sphérique ou en aiguilles, avec l'axe longitudinal orienté perpendiculairement à la surface de la couche.

5. Revêtement selon l'une quelconque des revendications 1 à 4, caractérisé en ce que dans le domaine spectral solaire, en particulier à $\lambda = 0,5$ $\mu$m, le matériau de support présente un coefficient d'absorption compris entre 1 et 2,5 qui approche autant que possible la valeur de l'indice de réfraction des zones diélectriques et que l'indice de réfraction du matériau de support est aussi faible que possible et inférieur à 1.

6. Revêtement selon l'une quelconque des revendications 1 à 5, caractérisé en ce que les zones diélectriques sont également transparentes dans l'infrarouge, autour de $\lambda = 10$ $\mu$m : $k_p = 0$ (infrarouge).

7. Revêtement selon l'une quelconque des revendications 1 à 6, caractérisé en ce que l'indice de réfraction du revêtement se situe entre 1 et 1,5.

8. Revêtement selon l'une quelconque des revendications 1 à 7, caractérisé en ce que des métaux utilisés comme matériau de support présentent un indice de réfraction relativement faible dans le domaine solaire, par exemple Au, Ag, Cu, Al, Mg, Y, Zr.

9. Revêtement selon l'une quelconque des revendications 1 à 7, caractérisé en ce qu'un composé intermétallique des métaux alcalins ou alcalino-terreux est utilisé comme matériau de support.

10. Revêtement selon l'une quelconque des revendications 1 à 7, caractérisé en ce que des semiconducteurs transparents dans le domaine visible et dans l'infrarouge tels que $SnO_2$ ou $In_2O_3$ sont utilisés comme matériau diélectrique.

11. Revêtement selon l'une quelconque des revendications 1 à 7, caractérisé en ce que l'air ou d'autres matières, par exemple des matières plastiques, des halogénures alcalins et alcalino-terreux, qui sont transparents dans le domaine visible et dans l'infrarouge sont utilisés comme matériau diélectrique.

12. Procédé pour la réalisation d'un revêtement selon l'une quelconque des revendications 1 à 11, caractérisé en ce qu'une mince couche d'un mélange métal-métal ou d'un alliage est appliquée et que l'une des composantes métalliques (particules) est oxydée sélectivement par un stockage consécutif à l'air ou par un traitement thermique.

13. Procédé pour la réalisation d'un revêtement selon l'une quelconque des revendications 1 à 11, caractérisé en ce qu'une mince couche d'un mélange métal-métal ou d'un alliage est appliquée par pulvérisation cathodique et qu'une réaction sélective de l'une des composantes métalliques est provoquée ensuite par conversion de plasma dans un composé gazeux de fluor, d'azote ou de bore, avec formation d'un fluorure, nitrure ou borure diélectrique transparent.

14. Procédé pour la réalisation d'un revêtement selon l'une quelconque des revendications 1 à 11, caractérisé en ce qu'il prévoit l'application d'une mince couche d'un mélange de deux composés métaliques présentant une stabilité thermique différente et, de préférence, une grosseur de grain différente, et que l'une des composantes métalliques (matériau de support) est ensuite réduite de manière sélective en métal par un traitement thermique (réducteur).

15. Procédé pour la réalisation d'un revêtement selon l'une quelconque des revendications 1 à 11, caractérisé en ce qu'il prévoit l'application d'une mince couche d'un métal A et d'un sous-oxyde BO et un disproportionnement partiel des composants déclenché par un traitement thermique consécutif, le sous-oxyde se transformant en un oxyde stable de valence supérieure (non-conducteur et transparent), par exemple $BO_2$, avec formation simultanée d'un composé conducteur AB qui relie entre elles les particules métalliques isolées auparavant.

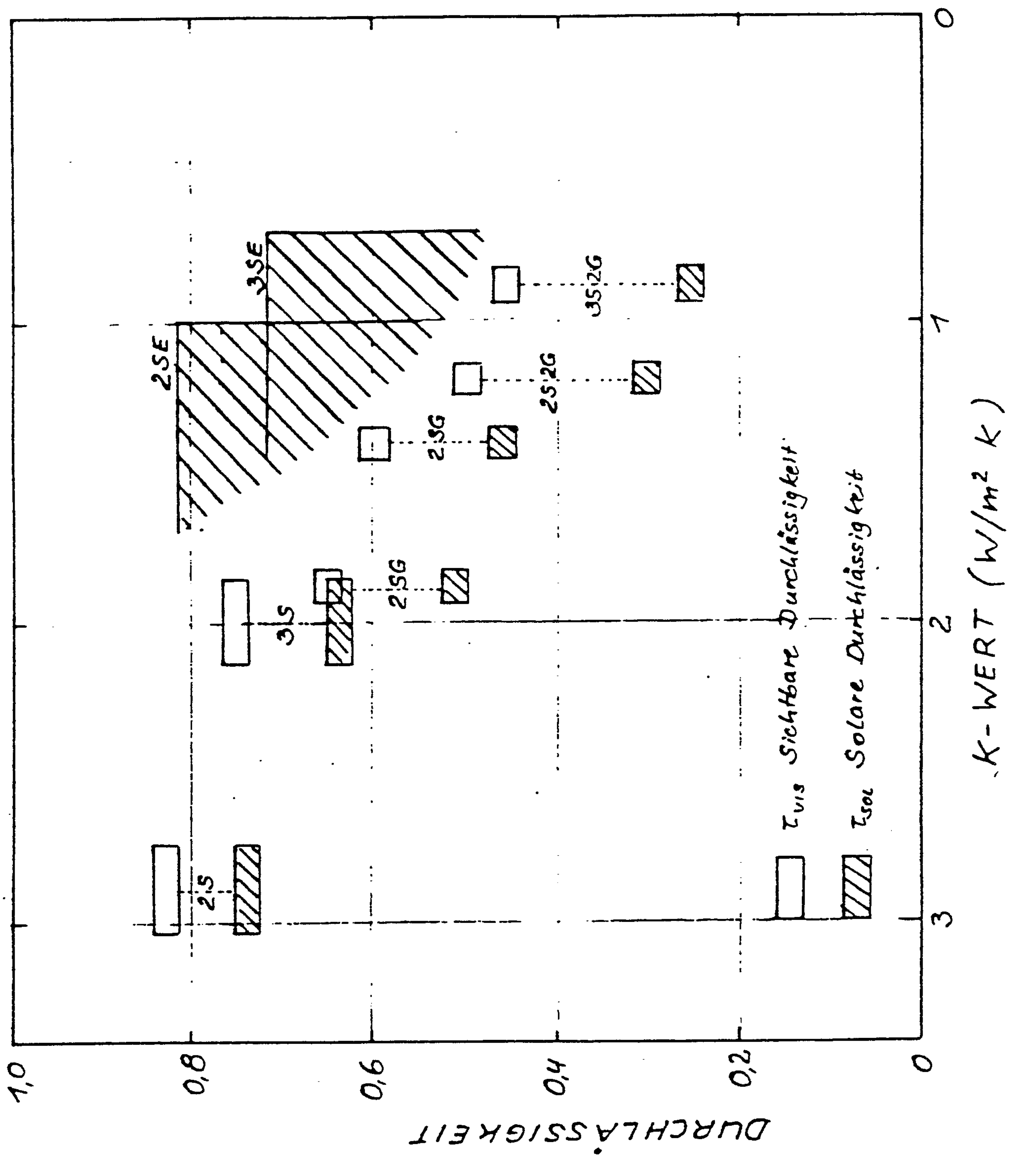
DURCHLÄSSIGKEIT
1,0
0,8
0,6
0,4
0,2
0
K-WERT (W/m² K)
3
2
1
0
2S
3S
2SG
2SE
3SE
2S2G
3S2G
τvis Sichtbare Durchlässigkeit
τsol Solare Durchlässigkeit

Fig. 1

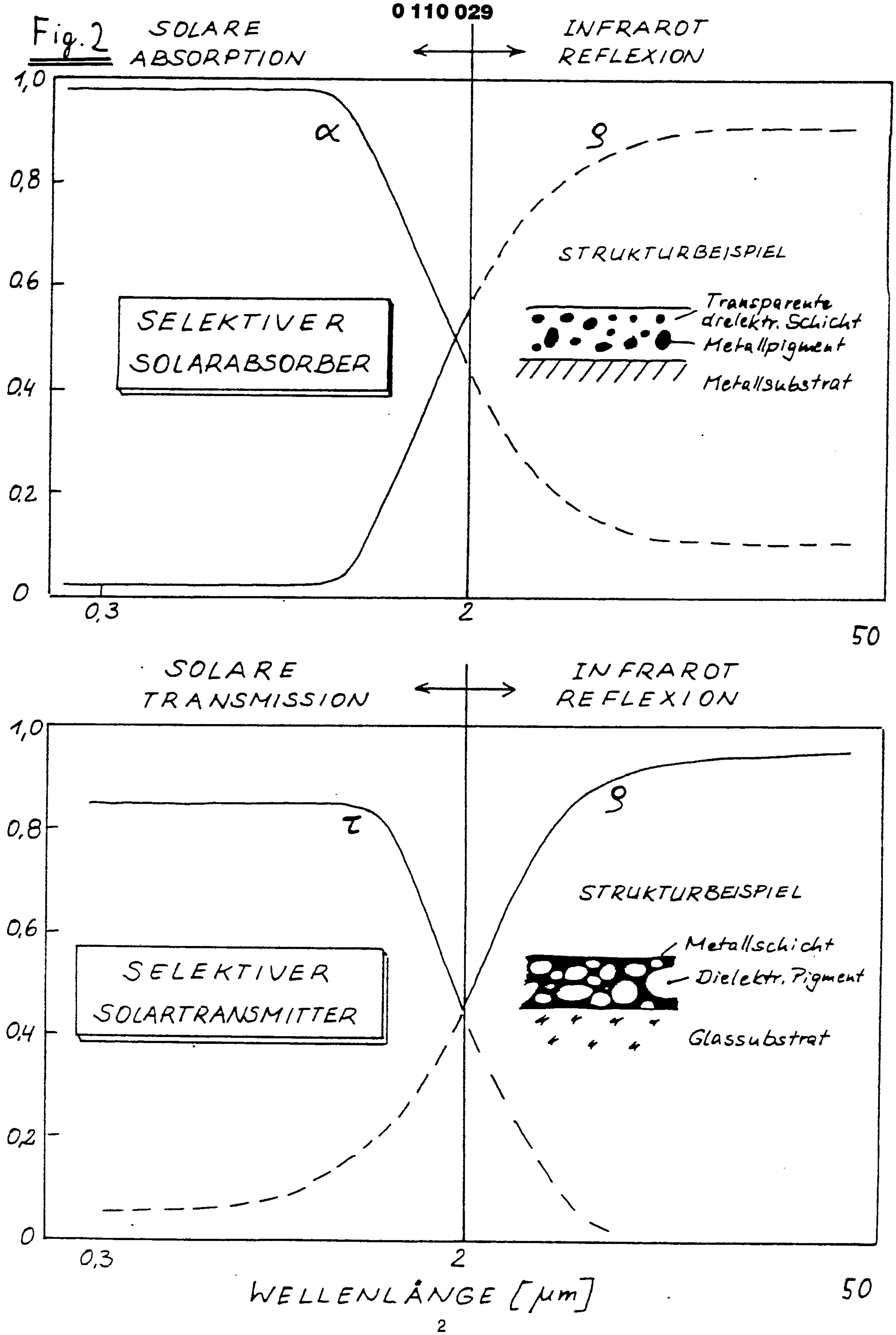

Fig. 2
SOLARE ABSORPTION
INFRAROT REFLEXION
1,0
0,8
0,6
0,4
0,2
0
α
ρ
SELEKTIVER SOLARABSORBER
STRUKTURBEISPIEL
Transparente dielektr. Schicht
Metallpigment
Metallsubstrat
0,3
2
50
SOLARE TRANSMISSION
INFRAROT REFLEXION
τ
ρ
SELEKTIVER SOLARTRANSMITTER
STRUKTURBEISPIEL
Metallschicht
Dielektr. Pigment
Glassubstrat
WELLENLÄNGE [μm]

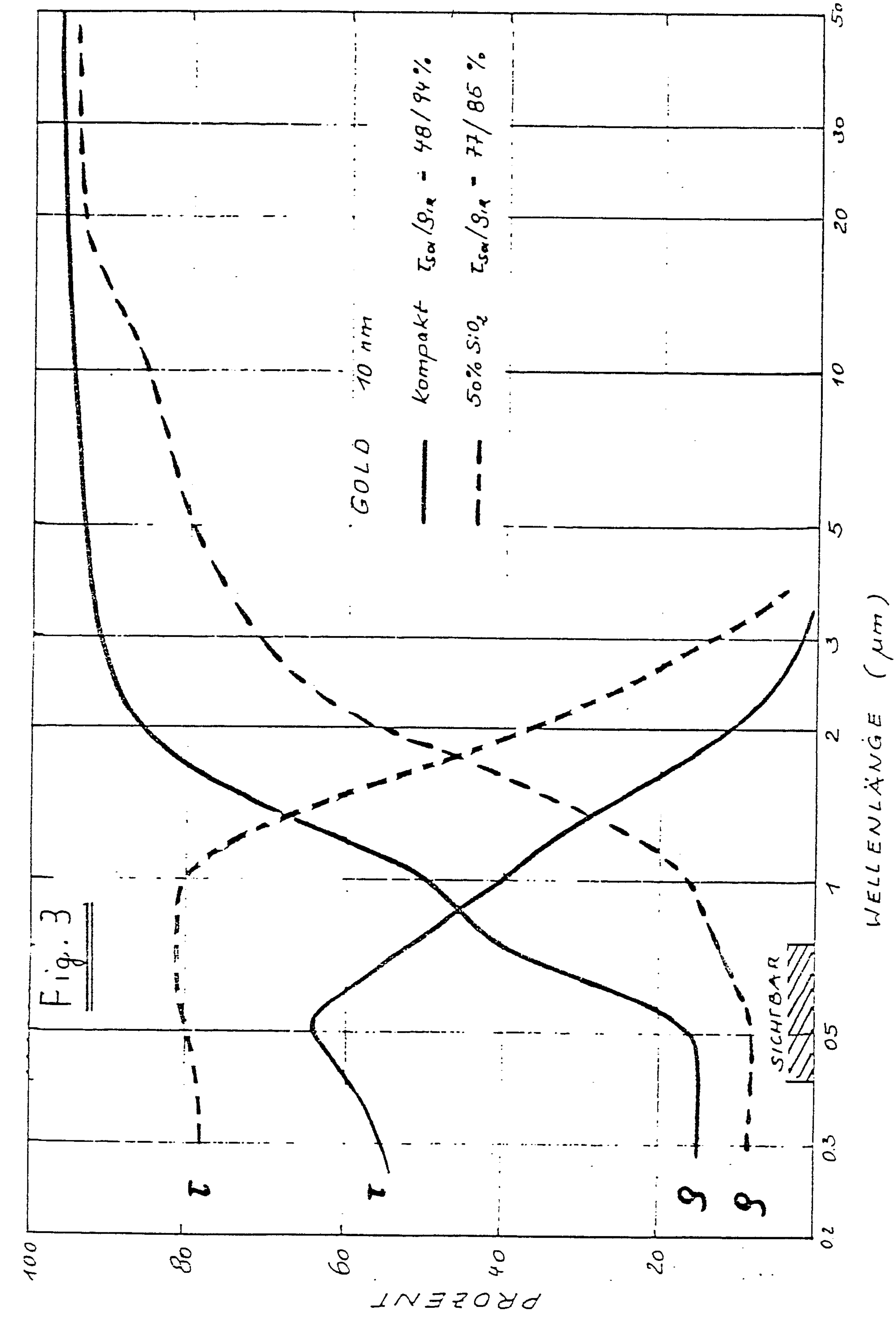
Fig. 3
GOLD 10 nm
kompakt τsol/ρIR = 48/94 %
50% SiO2 τsol/ρIR = 77/86 %
SICHTBAR
WELLENLÄNGE (μm)
PROZENT
τ
ρ
0.2
0.3
05
1
2
3
5
10
20
30
50
100
80
60
40
20